# DEMANDE DE BREVET EUROPEEN

(11) **EP 4 020 245 A1**
(43) Date de publication de la demande: **29.06.2022**
(21) Numéro de dépôt: 21217347.0
(22) Date de dépôt: 23.12.2021
(51) Int. Cl.: G06F 15/167, G06F 21/60

(54) **SYSTÈME ÉLECTRONIQUE COMPRENANT PLUSIEURS MICROPROCESSEURS**

(30) Priorité: 28.12.2020 FR 2014176
(71) Demandeur: STMicroelectronics (Rousset) SAS, 13790 Rousset (FR); STMicroelectronics (Grand Ouest) SAS, 72100 Le Mans (FR)
(72) Inventeur: COUVRAND, Julien, 72000 LE MANS (FR); ORLANDO, William, 13790 PEYNIER (FR)
(74) Mandataire: Cabinet Beaumont

(57) **Abrégé**

La présente description concerne un système électronique (5) comprenant un ou des premiers microprocesseurs (10), un deuxième microprocesseur (20) de gestion sécurisée de premières clés cryptographiques des premiers microprocesseurs, le deuxième microprocesseur étant configuré pour communiquer avec chaque premier microprocesseur et comprenant une première mémoire non volatile (23) dans laquelle est mémorisée au moins une deuxième clé, et pour chaque premier microprocesseur, une deuxième mémoire non volatile (30) externe au deuxième microprocesseur et contenant les premières clés du premier microprocesseur cryptées avec la deuxième clé.

## Description

### Domaine technique

La présente description concerne de façon générale les systèmes électroniques, et plus particulièrement les systèmes électroniques comprenant plusieurs microprocesseurs.

### Technique antérieure

On connaît des systèmes électroniques comprenant plusieurs microprocesseurs. Parmi ces systèmes, on s'intéresse plus particulièrement ici au cas de systèmes comprenant au moins un microprocesseur se comportant, pour les autres microprocesseurs du système, comme une boîte noire. Un tel microprocesseur, appelé microprocesseur sécurisé, met en oeuvre un jeu de fonctions ou services, généralement critiques pour la sécurité du système, par exemple des services de chiffrement/déchiffrement aussi appelés services de cryptographie. Ce jeu de services est mis à disposition des autres microprocesseurs du système, également appelés microprocesseurs hôtes.

Pour les opérations de chiffrement/déchiffrement, le microprocesseur sécurisé utilise des clés de chiffrement/déchiffrement, appelés clés d'hôte, qui dépendent généralement des microprocesseurs hôtes sollicitant les services du microprocesseur sécurisé. Ces clés d'hôte doivent être mémorisées dans une mémoire non volatile. Il peut être souhaitable de pouvoir modifier les clés d'hôte au cours du fonctionnement du système électronique. Il faut donc que les clés soient mémorisées dans une mémoire non volatile effaçable et programmable. Toutefois, le microprocesseur peut ne pas comprendre de mémoire non volatile effaçable et programmable. Les clés d'hôte doivent être alors mémorisées dans une mémoire non volatile effaçable et programmable externe au microprocesseur sécurisé. Il peut alors être difficile d'assurer une gestion sécurisée des clés d'hôte.

### Résumé de l'invention

Un mode de réalisation pallie tout ou partie des inconvénients des systèmes électroniques comprenant plusieurs microprocesseurs connus.

Un mode de réalisation prévoit un système électronique comprenant :
- un ou des premiers microprocesseurs ;
- un deuxième microprocesseur de gestion sécurisée de premières clés cryptographiques des premiers microprocesseurs, le deuxième microprocesseur étant configuré pour communiquer avec chaque premier microprocesseur et comprenant une première mémoire non volatile dans laquelle est mémorisée au moins une deuxième clé ; et
- pour chaque premier microprocesseur, une deuxième mémoire non volatile externe au deuxième microprocesseur et contenant les premières clés du premier microprocesseur cryptées avec la deuxième clé.

Un mode de réalisation prévoit également un procédé de fonctionnement d'un système électronique comprenant :
- un ou des premiers microprocesseurs ;
- un deuxième microprocesseur de gestion sécurisée de premières clés cryptographiques des premiers microprocesseurs, le deuxième microprocesseur communiquant avec chaque premier microprocesseur et comprenant une première mémoire non volatile dans laquelle est mémorisée au moins une deuxième clé ; et
- pour chaque premier microprocesseur, une deuxième mémoire non volatile externe au deuxième microprocesseur et contenant les premières clés du premier microprocesseur cryptées avec la deuxième clé.

Selon un mode de réalisation, pour chaque premier microprocesseur, le deuxième microprocesseur est relié à la deuxième mémoire non volatile associée au premier microprocesseur seulement par l'intermédiaire du premier microprocesseur.

Selon un mode de réalisation, pour chaque premier microprocesseur, la deuxième mémoire non volatile associée au premier microprocesseur contient une table répertoriant les premières clés du premier microprocesseur et ayant une partie cryptée avec la deuxième clé ou avec une autre deuxième clé mémorisée dans la première mémoire non volatile.

Selon un mode de réalisation, le deuxième microprocesseur contient une mémoire volatile et, pour chaque premier microprocesseur, le deuxième microprocesseur est configuré pour demander au premier microprocesseur de lui transmettre la table mémorisée dans la deuxième mémoire non volatile associée au premier microprocesseur, pour, à réception de la table, décrypter la partie cryptée de la table en utilisant la deuxième clé ou ladite autre deuxième clé, et pour mémoriser la partie décryptée de la table dans la mémoire volatile.

Selon un mode de réalisation, pour chaque premier microprocesseur, la table mémorisée dans la deuxième mémoire non volatile associée au premier microprocesseur contient un compteur monotone.

Selon un mode de réalisation, le deuxième microprocesseur est configuré, pour chaque premier microprocesseur, pour demander au premier microprocesseur de lui transmettre la valeur du compteur monotone de la table présente dans la deuxième mémoire non volatile associée au premier microprocesseur, et de vérifier la validité de la valeur du compteur monotone transmise.

Selon un mode de réalisation, le deuxième microprocesseur est configuré pour demander au premier microprocesseur de lui transmettre les premières clés cryptées mémorisées dans la deuxième mémoire non volatile associée au premier microprocesseur et pour décrypter les premières clés transmises.

Selon un mode de réalisation, le deuxième microprocesseur est configuré pour déterminer, pour chaque première clé transmise, si la première clé peut être mémorisée dans la mémoire volatile, et, si cela est le cas, de mémoriser la première clé décryptée dans la mémoire volatile.

Selon un mode de réalisation, pour chaque premier microprocesseur, le deuxième microprocesseur est configuré pour mettre à jour la table et l'une des premières clés du premier microprocesseur, pour crypter la partie de la table et la première clé en utilisant la deuxième clé ou ladite autre deuxième clé, et pour commander le premier microprocesseur pour qu'il mémorise dans la deuxième mémoire non volatile associée au premier microprocesseur la table mise à jour et la première clé mise à jour.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente un mode de réalisation d'un système électronique comprenant plusieurs microprocesseurs, dont un microprocesseur sécurisé ;

la figure 2 représente, par un schéma par blocs, un mode de réalisation d'un procédé de gestion de clés d'hôte du système électronique de la figure 1 ;

la figure 3 représente, par un schéma par blocs, un autre mode de réalisation d'un procédé de mise à jour de clés d'hôte du système électronique de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les étapes et éléments utiles à la compréhension des modes de réalisation décrits ont été représentés et sont détaillés. Sauf précision contraire, les expressions "environ", "approximativement", "sensiblement", et "de l'ordre de" signifient à 10 % près, de préférence à 5 % près.

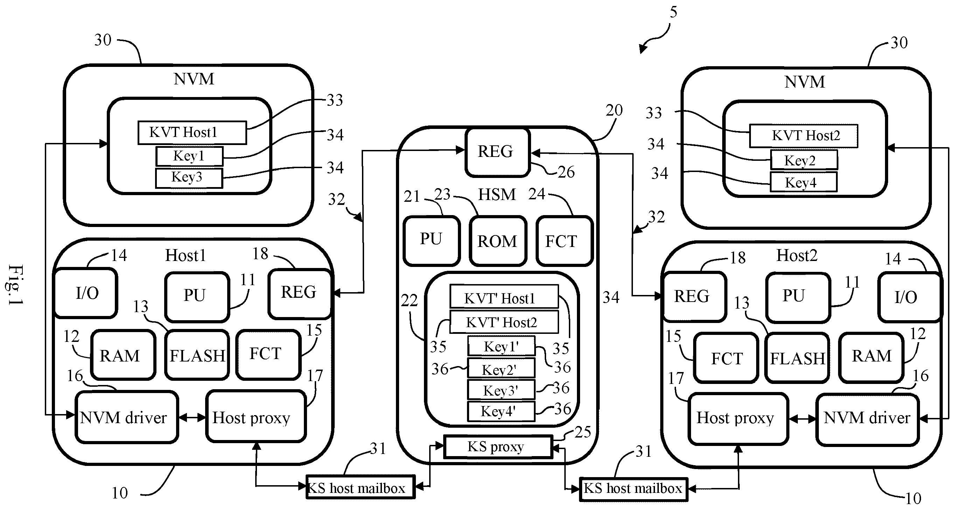

La figure 1 représente, de façon partielle et schématique, un système électronique 5. A titre d'exemple, le système électronique peut correspondre au réseau de bord d'un véhicule automobile.

Le système électronique 5 comprend plusieurs microprocesseurs, des premier et deuxième microprocesseurs 10 (Host1 et Host2) et un troisième microprocesseur 20 (HSM) étant représentés dans cet exemple. Le microprocesseur 20 se comporte comme une boîte noire. Dit autrement, le microprocesseur 20 met à disposition un jeu de services ou de fonctions pour les autres microprocesseurs 10 du système, appelés microprocesseurs hôtes par la suite, sans que ces derniers ne puissent accéder au contenu du microprocesseur 20. Plus particulièrement, les microprocesseurs hôtes 10 du système 5 ne peuvent pas accéder aux codes logiciels ou au matériel mettant en oeuvre les services exposés par le microprocesseur 20, ni aux données utilisées et/ou générées en interne du microprocesseur 20 pour la mise en oeuvre de ces services.

Dans ce mode de réalisation, le microprocesseur 20 est un microprocesseur sécurisé, ou, dit autrement, une boîte noire transactionnelle, BNT (en anglais "Hardware Secure Module", HSM).

Par microprocesseur, on entend ici un dispositif électronique comprenant, dans un même circuit intégré, une unité centrale de traitement et au moins une mémoire non volatile stockant des instructions qui, lorsqu'elles sont lues par l'unité centrale, entraînent la mise en oeuvre de fonctions.

Plus particulièrement, dans cet exemple, chaque microprocesseur hôte 10 comporte :
- une unité de traitement 11 (PU), par exemple une machine d'états, un circuit logique programmable, etc. ;
- une ou plusieurs mémoires volatiles, par exemple une mémoire 12 de type RAM, par exemple pour stocker temporairement des informations (instructions, adresses, données) pendant les traitements ;
- une ou plusieurs mémoires non volatiles, par exemple une mémoire 13 de type flash (FLASH), pour stocker des informations de façon durable et en particulier quand le microprocesseur hôte 10 n'est pas alimenté ;
- un ou plusieurs bus (non représentés) de données, d'adresses et/ou de commandes entre les différents éléments internes au microprocesseur hôte 10 ; et
- une interface d'entrée-sortie 14 (I/O) de communication, par exemple de type bus série, avec l'extérieur du microprocesseur hôte 10, par exemple pour programmer des fonctions et/ou enregistrer des données dans le microprocesseur hôte 10.

Par ailleurs, le microprocesseur hôte 10 peut intégrer d'autres fonctions, symbolisées par un bloc 15 (FCT), selon l'application, par exemple, un coprocesseur, d'autres interfaces, d'autres mémoires, etc.

Dans cet exemple, le microprocesseur sécurisé 20 comporte :
- une unité de traitement 21 (PU), par exemple une machine d'états, un circuit logique programmable, etc. ;
- une ou plusieurs mémoires volatiles 22, par exemple une mémoire 22 de type RAM, par exemple pour stocker temporairement des informations (instructions, adresses, données) pendant les traitements ;
- une ou plusieurs mémoires non volatiles 23, par exemple une mémoire morte 23 de type ROM, pour stocker des informations de façon durable et en particulier quand le microprocesseur sécurisé 20 n'est pas alimenté ; et
- un ou plusieurs bus (non représentés) de données, d'adresses et/ou de commandes entre les différents éléments internes au microprocesseur sécurisé 20.

Par ailleurs, le microprocesseur sécurisé 20 intègre généralement d'autres fonctions, symbolisées par un bloc 24 (FCT), selon l'application, par exemple, un crypto-processeur, d'autres mémoires, etc. De préférence, le microprocesseur 20 intègre au moins un circuit de cryptographie, ou crypto-processeur, pour chiffrer/déchiffrer des données, par exemple selon un algorithme AES GCM, un algorithme AES CBC ou un algorithme RSA.

A chaque microprocesseur hôte 10 est associée une mémoire non volatile 30 (NVM). Chaque mémoire non volatile 30 correspond par exemple à mémoire morte effaçable électriquement et programmable (EEPROM, sigle anglais pour Electrically-Erasable Programmable Read-Only Memory), notamment une mémoire flash, en particulier une mémoire flash NOR, ou une mémoire flash NAND, ou encore une mémoire flash EMMC. La mémoire non volatile 30 peut correspondre à un élément interne du microprocesseur hôte 10, par exemple la mémoire non volatile 13 décrite précédemment, ou être un composant distinct du microprocesseur hôte 10.

Chaque microprocesseur hôte 10 comprend un module 16 (NVM driver) de commande de la mémoire non volatile 30 configuré pour échanger des données avec la mémoire non volatile 30 et avec un module d'interface 17 (Host proxy).

Le microprocesseur sécurisé 20 peut échanger des données avec chaque microprocesseur hôte 10 par un canal de communication 31 (KS host mailbox). Le module d'interface 17 du microprocesseur hôte 10 est relié au canal de communication 31. Le microprocesseur sécurisé 20 comprend un module d'interface 25 (KS proxy) pour l'échange de données sur chaque canal de communication 31.

Afin que le microprocesseur sécurisé 20 puisse exposer des services au microprocesseur hôte 10, et que le microprocesseur hôte 10 puisse requérir l'accès à l'un de ces services, les microprocesseurs 10 et 20 partagent une interface sécurisée 32.

L'interface 32 comprend par exemple un espace de mémoire ou de stockage 26 (REG) faisant partie du microprocesseur sécurisé 20, et un espace de mémoire ou de stockage 18 (REG) faisant partie du microprocesseur hôte 10. Les espaces de stockage 18 et 26 sont de préférence des registres. Lorsque le microprocesseur hôte 10 souhaite accéder à un service exposé par le microprocesseur sécurisé 20, il l'indique par une requête, en modifiant un ou plusieurs bits du registre 26. Le microprocesseur sécurisé 20 détecte cette requête et vient lire une zone mémoire spécifique, par exemple prédéterminée, de l'espace mémoire du microprocesseur hôte 10, par exemple de la mémoire 12, où est enregistré un descripteur de requête. Un descripteur de requête correspond en pratique à des données indiquant à quel service du microprocesseur sécurisé 20 le microprocesseur hôte 10 souhaite accéder, et, le cas échéant, les paramètres déterminant comment le service appelé doit être mis en œuvre.

Le microprocesseur sécurisé 20 peut notamment être sollicité par chaque microprocesseur hôte 10 pour effectuer des opérations utilisant des clés de cryptage, appelées clé d'hôte par la suite. Chaque clé d'hôte est dédiée à l'un des microprocesseurs hôtes 10. Plusieurs clés d'hôte peuvent être associées à chaque microprocesseur hôte 10. Les clés d'hôte peuvent être dédiées à des opérations de cryptage/décryptage selon des algorithmes différents. A titre d'exemple, les clés d'hôte peuvent être utilisées par un algorithme de chiffrement symétrique, notamment le chiffrement AES (sigle anglais pour Advanced Encryption Standard), en particulier AES-128 ou AES-256, un algorithme de chiffrement asymétrique, notamment le chiffrement RSA, ECC, ou pour la réalisation d'un code d'authentification de message, du type HMAC (sigle anglais pour keyed-hash message authentication code).

Au moins une clé de cryptage, appelée clé SSK-PSE, qui est propre au circuit de sécurité 20 est mémorisée dans la mémoire non volatile 23 du microprocesseur sécurisé 20. De préférence, au moins deux clés de cryptage, appelées clé SSK-KVT et clé SSK-PSE, qui sont propres au circuit de sécurité 20 sont mémorisées dans la mémoire non volatile 23 du microprocesseur sécurisé 20.

Selon un mode de réalisation, la gestion des clés de cryptage par le microprocesseur sécurisé 20 met en oeuvre deux objets. Le premier objet est une table de version de clé, appelée par la suite KVT. Il y a une KTV pour chaque microprocesseur hôte 10 contenant des informations relatives aux clés d'hôte de ce microprocesseur hôte 10. Le deuxième objet est un élément de stockage protégé, appelé PSE par la suite. Chaque PSE comprend des données relatives à une clé d'hôte.

Pour chaque microprocesseur 10, la KVT de ce microprocesseur hôte 10 est mémorisée dans la mémoire non volatile 30 associée à ce microprocesseur hôte 10. En figure 1, on a représenté, de façon schématique par des rectangles 33, la KVT (KVT Host1) mémorisée dans la mémoire non volatile 30 associée au premier microprocesseur hôte 10 et la KVT (KVT Host2) mémorisée dans la mémoire non volatile 30 associée au deuxième microprocesseur hôte 10. En outre, pour chaque microprocesseur 10, les PSE des clés d'hôte de ce microprocesseur hôte 10 sont mémorisées dans la mémoire non volatile 30 associée à ce microprocesseur hôte 10. En figure 1, on a représenté, de façon schématique par des rectangles 34, les PSE de deux clés d'hôte (Key1, Key3) mémorisées dans la mémoire non volatile 30 associée au premier microprocesseur hôte 10 et les PSE de deux clés d'hôte (Key2, Key4) mémorisées dans la mémoire non volatile du deuxième microprocesseur hôte 10.

Selon un mode de réalisation, en fonctionnement normal, pour chaque microprocesseur hôte 10, la KVT associée au microprocesseur hôte 10 est mémorisée dans la mémoire volatile 22 du microprocesseur sécurisé 20. En figure 1, on a représenté, de façon schématique par des rectangles 35, la KVT (KVT' Host1) du premier microprocesseur hôte 10 et la KVT (KVT' Host2) du deuxième microprocesseur hôte 10 mémorisées dans la mémoire volatile 22 du microprocesseur sécurisé 20.

Selon un mode de réalisation, en fonctionnement normal, pour chaque microprocesseur hôte 10, le PSE de chaque clé d'hôte associée à chaque microprocesseur hôte 10 peut également être mémorisée dans la mémoire volatile 22 du microprocesseur sécurisé 20. En figure 1, on a représenté, de façon schématique par des rectangles 36, les PSE (Key1', Key3') du premier microprocesseur hôte 10 et les PSE (Key2', Key4') du deuxième microprocesseur hôte 10 mémorisées dans la mémoire volatile 22 du microprocesseur sécurisé 20.

Le tableau Table 1 suivant représente un exemple de données pouvant être contenues dans une KVT mémorisée dans la mémoire non volatile 30, sachant que la KVT peut comprendre des données supplémentaires.

**[Table 1]**

| Section | Description | |
|---|---|---|
| Entête | Identifiant de KVT | |
| | Compteur monotone (mc) de protection anti retour en arrière | |
| Etiquette | Etiquette d'intégrité de la KVT | |
| Charge utile | Nombre maximum de clés AES-128 | |
| | Nombre maximum de clés AES-256 | |
| | Nombre maximum de clés RSA | |
| | Nombre maximum de clés ECC | |
| | Nombre maximum de clés HMAC | |
| | Nombre maximum total de clés | |
| | Nombre d'entrées | |
| | Table des clés présentes | |
| | Table des clés mémorisables | |
| | Entrée 1 | mc |
| | Entrée 2 | mc |
| | ... | |
| | Entrée 127 | mc |
| | Entrée 128 | mc |

Les données relatives à l'entête de la KTV sont des données qui ne sont pas cryptées. Les données relatives à la charge utile (en anglais payload) de la KTV sont des données cryptées en utilisant la clé SSK-KVT du microprocesseur sécurisé 20. L'étiquette d'intégrité de la KVT est un nombre déterminé par un calcul à partir de l'entête de la KVT et au moins une partie de la charge utile cryptée de la KVT.

Le compteur monotone (mc) basé sur une mémoire non volatile maintient un compte ou une valeur qui ne peut être mis à jour que par un nombre ou une quantité approprié dans un sens. C'est-à-dire que le compteur monotone peut uniquement incrémenter sa valeur d'un nombre approprié ou décrémenter sa valeur d'un nombre approprié, mais pas les deux.

Le tableau Table 2 suivant représente un exemple de données pouvant être contenues dans un PSE, sachant que le PSE peut comprendre des données supplémentaires.

**[Table 2]**

| Section | Description |
|---|---|
| Entête | Identifiant de PSE |
| | Compteur monotone (mc) de protection anti retour en arrière |
| | Taille de la charge utile du PSE |
| Etiquette | Etiquette d'intégrité du PSE |
| Charge utile | Identifiant de la clé |
| | Type de la clé |
| | Taille de la clé |
| | Données de la clé |

Les données relatives à l'entête du PSE sont des données qui ne sont pas cryptées. Les données relatives à la charge utile du PSE sont des données cryptées en utilisant la clé SSK-PSE du microprocesseur sécurisé 20. L'étiquette d'intégrité de la PSE est un nombre déterminé par un calcul à partir de l'entête du PSE et au moins une partie de la charge utile cryptée du PSE.

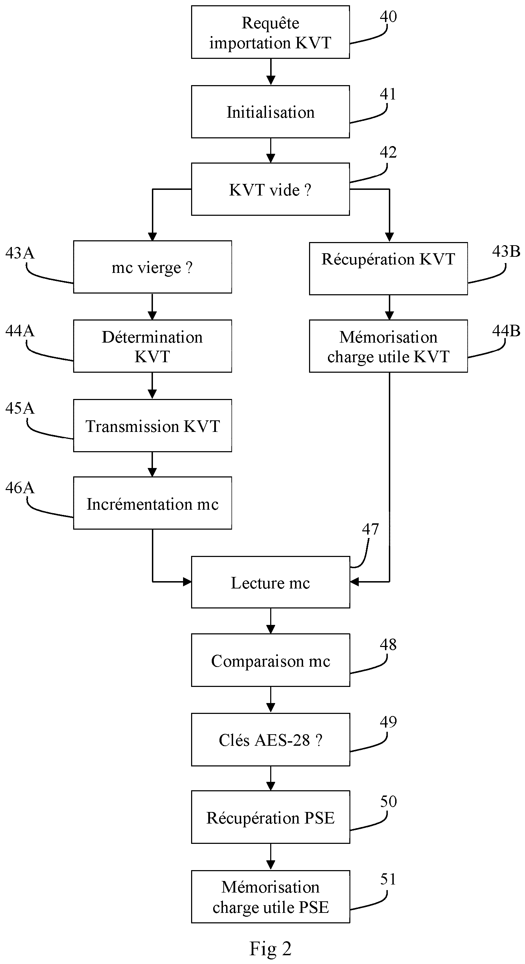

La figure 2 illustre, par un schéma par blocs, un mode de réalisation d'un procédé de chargement par le microprocesseur sécurisé 20 de la KVT et des PSE d'un microprocesseur hôte 10.

A l'étape 40, le microprocesseur hôte 10 fait une requête au microprocesseur sécurisé 20, par l'interface sécurisée 32, pour l'importation par le microprocesseur sécurisé 20 de la KVT et des PSE du microprocesseur hôte 10. Le procédé se poursuit à l'étape 41.

A l'étape 41, le microprocesseur sécurisé 20 réalise des étapes d'initialisation préalables au chargement de la KVT et des PSE. Ces étapes comprennent l'initialisation de la source du compteur monotone (c'est-à-dire la création d'un compteur monotone stocké soit dans la mémoire volatile 30 ou dans la mémoire volatile interne 22 du microprocesseur sécurisé 20), une étape d'initialisation des clés SSK-PSE et SSK-KVT, et une étape de synchronisation avec la mémoire non volatile 30 associé au microprocesseur hôte 10 ayant émis la requête à l'étape 40 par l'intermédiaire du module d'interface 17 et du module 16 de commande de la mémoire non volatile 30. Le procédé se poursuit à l'étape 42.

A l'étape 42, le microprocesseur hôte 10 transmet au microprocesseur sécurisé 20 des premières données relatives à la KVT mémorisées dans la mémoire 30. Le microprocesseur sécurisé 20 détermine à partir de ces données si la KVT est vide. Si le microprocesseur sécurisé 20 détermine que la KVT est vide, le procédé se poursuit à l'étape 43A. Si le microprocesseur sécurisé 20 détermine que la KVT n'est pas vide, le procédé se poursuit à l'étape 43B.

A l'étape 43A, le microprocesseur sécurisé 20 vérifie que la valeur du compteur monotone de la KVT est vierge. Le microprocesseur sécurisé 20 produit la charge utile de la KVT, qui est mémorisée dans la mémoire volatile 22 du microprocesseur sécurisé 20, et incrémente la valeur du compteur monotone. Le procédé se poursuit à l'étape 44A.

A l'étape 44A, le microprocesseur sécurisé 20 détermine la KVT devant être mémorisée dans la mémoire non volatile 30, c'est-à-dire qu'il crypte la charge utile, produit l'entête de la KVT, et l'étiquette d'intégrité de la KVT. L'opération de cryptage est réalisée en utilisant la clé SSK-KVT. Le procédé se poursuit à l'étape 45A.

A l'étape 45A, le microprocesseur sécurisé 20 transmet la KVT au microprocesseur hôte 10 pour que le microprocesseur hôte 10 réalise la mémorisation de la KVT dans la mémoire non volatile 30. Le procédé se poursuit à l'étape 46A.

A l'étape 46A, le microprocesseur sécurisé 20 incrémente le compteur monotone, préalablement initialisé à l'étape 41. En cas d'échec de l'opération, le microprocesseur sécurisé 20 interrompt le procédé et émet un message d'erreur. Le procédé se poursuit à l'étape 47.

A l'étape 43B, le microprocesseur hôte 10 récupère dans la mémoire non volatile 30 la dernière version de la KVT fournie par le microprocesseur sécurisé 20 et la transmet au microprocesseur sécurisé 20. Le microprocesseur sécurisé 20 mémorise la KVT récupérée dans la mémoire volatile 22. Le procédé se poursuit à l'étape 44B.

A l'étape 44B, le microprocesseur sécurisé 20 décrypte la charge utile de la KTV et authentifie la KVT décryptée. Le microprocesseur sécurisé 20 mémorise alors la charge utile de la KVT décryptée dans la mémoire volatile 22. Le procédé se poursuit à l'étape 47.

A l'étape 47, le microprocesseur sécurisé 20 commande la lecture de la valeur courante du compteur monotone présente soit dans la mémoire non volatile 30 ou dans la mémoire volatile interne 22 du microprocesseur sécurisé 20. Le procédé se poursuit à l'étape 48.

A l'étape 48, le microprocesseur sécurisé 20 compare la valeur courante du compteur monotone lue à l'étape 47 avec celle attendue dans la KVT. En cas d'inégalité, le microprocesseur sécurisé 20 interrompt le procédé et émet un message d'erreur. Le procédé se poursuit à l'étape 49.

A l'étape 49, le microprocesseur sécurisé 20 détermine, à partir de la KVT, si des clés d'hôte pour un algorithme AES-128 sont présentes et si celles-ci peuvent être mémorisées dans la mémoire volatile 22. Le procédé se poursuit à l'étape 50.

A l'étape 50, le microprocesseur hôte 10 récupère dans la mémoire non volatile 30 le PSE de chaque clé AES-128 et la transmet au microprocesseur sécurisé 20. Le microprocesseur sécurisé 20 mémorise le PSE récupéré dans la mémoire volatile 22. Le procédé se poursuit à l'étape 51.

A l'étape 51, le microprocesseur sécurisé 20 décrypte la charge utile du PSE récupéré et authentifie le PSE décrypté. Le microprocesseur sécurisé 20 mémorise alors la charge utile du PSE décrypté dans la mémoire volatile 22.

Les étapes 49, 50, et 51 sont répétées pour les clés d'hôte pour un algorithme RSA, ECC, AES-256, et HMAC.

La lecture de la KVT et des PSE dans la mémoire non volatile 30 est réalisée par le microprocesseur hôte 10 et non par le microprocesseur sécurisé 20. Ceci permet de bénéficier de la puissance de lecture/écriture du microprocesseur hôte 10 qui peut être supérieure à celle du microprocesseur sécurisé 20. En outre, les clés d'hôte n'étant pas mémorisées dans la mémoire non volatile 23 du microprocesseur sécurisé 20, le nombre de clés d'hôte utilisées par le microprocesseur sécurisé 20 n'est pas limité par les dimensions de la mémoire non volatile 23. De plus, les charges utiles de la KTV et des PSE étant cryptées, ces données sont mémorisées de façon sécurisée. Ceci permet de façon avantageuse de s'affranchir de l'utilisation d'une mémoire spécifique avec un accès sécurisé pour le microprocesseur sécurisé 20. En outre, le compteur monotone peut correspondre au compteur monotone déjà disponible pour certaines mémoires non volatiles, notamment le compteur RPMC (sigle anglais pour Replay-Protected Monotonic Counter) pour une mémoire flash de type NOR ou le bloc RPMB (sigle anglais pour Replay Protected Memory Block) pour une mémoire flash de type eMMC (sigle anglais pour embedded Multi-Media Controller).

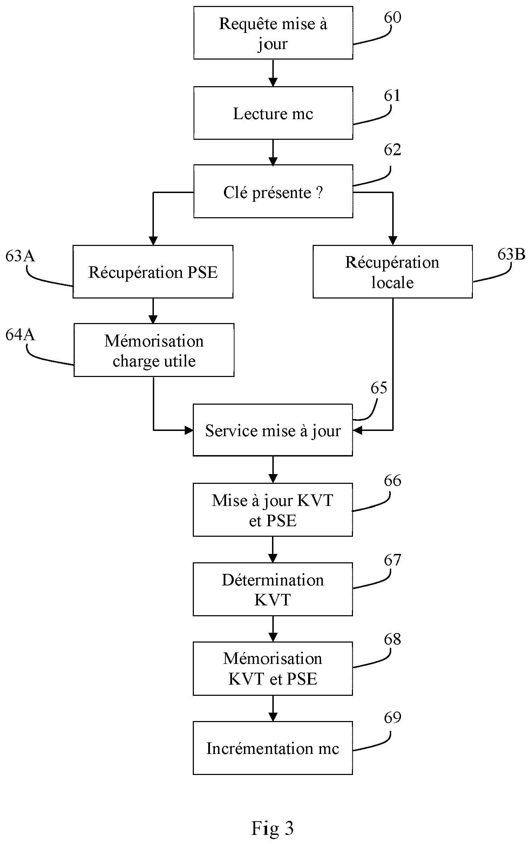

La figure 3 illustre, par un schéma par blocs, un mode de réalisation d'un procédé de mise à jour par le microprocesseur sécurisé 20 d'une clé d'hôte.

A l'étape 60, le microprocesseur hôte 10 fait une requête au microprocesseur sécurisé 20, par l'interface sécurisée 32, de mise à jour d'une clé d'hôte. Le procédé se poursuit à l'étape 61.

A l'étape 61, le microprocesseur sécurisé 20 commande la lecture de la valeur courante du compteur monotone présente dans la mémoire non volatile 30 ou dans la mémoire volatile interne 22 du microprocesseur sécurisé 20. Le procédé se poursuit à l'étape 62.

A l'étape 62, le microprocesseur sécurisé 20 détermine si la clé d'hôte est déjà présente dans la mémoire volatile 22. Si le microprocesseur sécurisé 20 détermine que la clé d'hôte n'est pas présente dans la mémoire volatile 22, le procédé se poursuit à l'étape 63A. Si le microprocesseur 20 détermine que la clé d'hôte est déjà présente dans la mémoire volatile 22, le procédé se poursuit à l'étape 63B.

A l'étape 63A, le microprocesseur d'hôte 10 récupère dans la mémoire non volatile 30 le PSE de la clé si cette clé peut être mémorisée dans la mémoire volatile 22. Si le PSE n'est pas présent dans la mémoire non volatile 30, le microprocesseur sécurisé 20 interrompt le procédé et émet un message d'erreur. Le microprocesseur sécurisé 20 mémorise le PSE récupéré dans la mémoire volatile 22. Le procédé se poursuit à l'étape 64A.

A l'étape 64A, le microprocesseur sécurisé 20 décrypte la charge utile du PSE et authentifie le PSE décrypté. Le microprocesseur sécurisé 20 mémorise alors la charge utile du PSE décrypté dans la mémoire volatile 22. Le procédé se poursuit à l'étape 65.

A l'étape 63B, le microprocesseur sécurisé 20 récupère les données dont il a besoin concernant la clé d'hôte dans la mémoire volatile 22. Le procédé se poursuit à l'étape 65.

A l'étape 65, le microprocesseur sécurisé 20 demande au microprocesseur hôte 10 la nouvelle clé en sollicitant le service de chargement de clé par l'interface sécurisée 32. Le procédé se poursuit à l'étape 66.

A l'étape 66, le microprocesseur sécurisé 20 met à jour la KVT du microprocesseur hôte 10 et la PSE de la clé d'hôte. En particulier, le microprocesseur sécurisé 20 incrémente la valeur du compteur monotone de la KVT (présent dans l'en-tête). Le procédé se poursuit à l'étape 67.

A l'étape 67, le microprocesseur sécurisé 20 détermine la KVT devant être mémorisée dans la mémoire non volatile 30, c'est-à-dire qu'il crypte la charge utile de la KVT, produit l'entête de la KVT, et l'étiquette d'intégrité de la KVT. L'opération de cryptage est réalisée en utilisant la clé SSK-KVT. Le procédé se poursuit à l'étape 68.

A l'étape 68, le microprocesseur sécurisé 20 transmet la KVT au microprocesseur hôte 10 pour que le microprocesseur hôte 10 réalise la mémorisation de la KVT dans la mémoire non volatile 30. Le procédé se poursuit à l'étape 69.

A l'étape 69, le microprocesseur sécurisé 20 incrémente le compteur monotone mémorisé dans la mémoire non volatile 30 ou dans la mémoire volatile interne 22 du microprocesseur sécurisé 20. En cas d'échec de l'opération, le microprocesseur sécurisé 20 interrompt le procédé et émet un message d'erreur.

Le microprocesseur sécurisé 20 peut mémoriser dans sa mémoire volatile 22 les clés d'hôte pour lesquelles cette mémorisation est autorisée. Ceci permet, de façon avantageuse, d'accélérer l'accès à ces clés d'hôte.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. Enfin, la mise en oeuvre pratique des modes de réalisation et variantes décrits est à la portée de la personne du métier à partir des indications fonctionnelles données ci-dessus.

## Revendications

1. Système électronique (5) comprenant :
- un ou des premiers microprocesseurs (10) ;
- un deuxième microprocesseur (20) de gestion sécurisée de premières clés cryptographiques des premiers microprocesseurs, le deuxième microprocesseur étant configuré pour communiquer avec chaque premier microprocesseur et comprenant une première mémoire non volatile (23) dans laquelle est mémorisée au moins une deuxième clé ; et
- pour chaque premier microprocesseur, une deuxième mémoire non volatile (30) externe au deuxième microprocesseur et contenant les premières clés du premier microprocesseur cryptées avec la deuxième clé.

2. Procédé de fonctionnement d'un système électronique (5) comprenant :
- un ou des premiers microprocesseurs (10) ;
- un deuxième microprocesseur (20) de gestion sécurisée de premières clés cryptographiques des premiers microprocesseurs, le deuxième microprocesseur communiquant avec chaque premier microprocesseur et comprenant une première mémoire non volatile (23) dans laquelle est mémorisée au moins une deuxième clé ; et
- pour chaque premier microprocesseur, une deuxième mémoire non volatile (30) externe au deuxième microprocesseur et contenant les premières clés du premier microprocesseur cryptées avec la deuxième clé.

3. Système électronique ou procédé selon la revendication 1 ou 2, dans lequel, pour chaque premier microprocesseur (10), le deuxième microprocesseur (20) est relié à la deuxième mémoire non volatile (30) associée au premier microprocesseur seulement par l'intermédiaire du premier microprocesseur.

4. Système électronique ou procédé selon l'une quelconque des revendications 1 à 3, dans lequel, pour chaque premier microprocesseur (10), la deuxième mémoire non volatile (30) associée au premier microprocesseur contient une table répertoriant les premières clés du premier microprocesseur et ayant une partie cryptée avec la deuxième clé ou avec une autre deuxième clé mémorisée dans la première mémoire non volatile (23).

5. Système électronique ou procédé selon la revendication 4, dans lequel le deuxième microprocesseur (20) contient une mémoire volatile (22) et dans lequel, pour chaque premier microprocesseur (10), le deuxième microprocesseur est configuré pour demander au premier microprocesseur de lui transmettre la table mémorisée dans la deuxième mémoire non volatile (30) associée au premier microprocesseur, pour, à réception de la table, décrypter la partie cryptée de la table en utilisant la deuxième clé ou ladite autre deuxième clé, et pour mémoriser la partie décryptée de la table dans la mémoire volatile (22).

6. Système électronique ou procédé selon la revendication 4 ou 5, dans lequel, pour chaque premier microprocesseur (10), la table mémorisée dans la deuxième mémoire non volatile (30) associée au premier microprocesseur contient un compteur monotone.

7. Système électronique ou procédé selon la revendication 6, dans lequel le deuxième microprocesseur (20) est configuré, pour chaque premier microprocesseur (10), pour demander au premier microprocesseur de lui transmettre la valeur du compteur monotone de la table présente dans la deuxième mémoire non volatile (30) associée au premier microprocesseur, et de vérifier la validité de la valeur du compteur monotone transmise.

8. Système électronique ou procédé selon l'une quelconque des revendications 1 à 7, dans lequel, pour chaque premier microprocesseur (10), le deuxième microprocesseur (20) est configuré pour demander au premier microprocesseur (10) de lui transmettre les premières clés cryptées mémorisées dans la deuxième mémoire non volatile (30) associée au premier microprocesseur et pour décrypter les premières clés transmises.

9. Système électronique ou procédé selon la revendication 8, dans lequel le deuxième microprocesseur (20) est configuré pour déterminer, pour chaque première clé transmise, si la première clé peut être mémorisée dans la mémoire volatile (22), et, si cela est le cas, de mémoriser la première clé décryptée dans la mémoire volatile.

10. Système électronique ou procédé selon la revendication 4 ou 5, dans lequel, pour chaque premier microprocesseur (10), le deuxième microprocesseur (20) est configuré pour mettre à jour la table et l'une des premières clés du premier microprocesseur, pour crypter la partie de la table et la première clé en utilisant la deuxième clé ou ladite autre deuxième clé, et pour commander le premier microprocesseur pour qu'il mémorise dans la deuxième mémoire non volatile (30) associée au premier microprocesseur la table mise à jour et la première clé mise à jour.
